# EUROPÄISCHE PATENTSCHRIFT

(11) **EP 1 764 528 B1**
(45) Veröffentlichungstag und Bekanntmachung des Hinweises auf die Patenterteilung: **28.05.2008**
(21) Anmeldenummer: 06016386.2
(22) Anmeldetag: 05.08.2006
(51) Int. Cl.: F16F 9/02

(54) **Bewegungsdämpfer**
Movement damper
Amortisseur de mouvement

(30) Priorität: 14.09.2005 DE 102005043785
(43) Veröffentlichungstag der Anmeldung: 21.03.2007
(73) Patentinhaber: Hörauf & Kohler Verwaltungs KG, 86199 Augsburg (DE)
(72) Erfinder: Willner, Wilfried, Dr. Ing., 86199 Augsburg (DE)
(74) Vertreter: Gehrsitz, Stefan

(56) Entgegenhaltungen:
- EP-A1- 0 562 284
- EP-A2- 1 134 450

## Beschreibung

Die Erfindung betrifft einen Bewegungsdämpfer nach dem Oberbegriff des Anspruchs 1.

Derartige Bewegungsdämpfer werden beispielsweise in Kraftfahrzeugen zur Dämpfung der Bewegung von beweglichen Bauteilen, wie z.B. Handschuhfachklappen, Heckklappen, ausfahrbaren Cup-Holdem oder Aschenbechern eingesetzt. Der Bewegungsdämpfer soll dabei die Geschwindigkeit des beweglichen Bauteils reduzieren oder auch Schwingungsbewegungen dämpfen, die beispielsweise beim Öffnen einer Handschuhfachklappe auftreten. Es sollen insbesondere abrupte Öffnungs- oder Schließbewegungen vermieden werden. Gleichzeitig soll die Schließbewegung ohne größeren Kraftaufwand ermöglicht werden.

Ein gattungsgemäßer Bewegungsdämpfer vom Luftzylindertyp ist aus der EP 0 562 284-A bekannt. Dieser Bewegungsdämpfer weist einen Zylinderkörper mit einer vorderen, stirnseitigen Öffnung auf, in dem ein Kolben gleitverschieblich angeordnet ist. Ein innerhalb des Zylinderkörpers angeordnetes Federelement dient zum Vorspannen des Kolbens in einer Schließrichtung. Innerhalb des Zylinderkörpers ist an dem Kolben ein Saitenelement, beispielsweise ein Faden oder ein Seil, befestigt. Auf der vorderen endseitigen Öffnung des Zylinderkörpers ist eine Kappe vorgesehen, die in ihrem Zentrum eine Öffnung aufweist, welche von einer gekrümmten Umfangsführungsfläche umgeben ist. Durch diese Öffnung in der Kappe wird das Saitenelement stimseitig aus dem Zylinderkörper herausgeführt und in Richtung seiner Anordnung, also beispielsweise in Richtung der Handschuhfachklappe, an der das Saitenelement befestigt wird, umgelenkt. Die Öffnungsbewegung des beweglichen Bauteils wird geregelt, indem der Kolben in einer Richtung durch das Saitenelement gegen die Vorspannkraft des Federelements bewegt wird und eine Schließbewegung des beweglichen Bauteils wird entsprechend geregelt, indem der Kolben in der entgegengesetzten Richtung durch die Vorspannkraft des Federelements bewegt wird. Durch die Herausführung des Saitenelements an der stirnseitigen Öffnung des Zylinderkörpers kann das Saitenelement frei in einer gewünschten Richtung über die Umfangsführungsfläche der Kappe umgelenkt werden, ohne dass die zusätzliche Verwendung von Umlenk- oder Führungsmitteln, wie beispielsweise eine Rolle, erforderlich wäre. Die Dämpfung wird bei diesem Bewegungsdämpfer im Wesentlichen bewirkt durch die am anderen stirnseitigen Ende des Zylinderkörpers angeordnete Luftzylinder-Dämpfungseinrichtung und andererseits auch über die Reibkraft, die bei der Reibungsbewegung des Saitenelements an der Umfangsführungsfläche auftritt.

Dieser bekannte Bewegungsdämpfer weist jedoch folgende Nachteile auf: Durch die relativ große Öffnung in der stirnseitigen Kappe, durch welche das Saitenelement aus dem zylindrischen Gehäuse herausgeführt wird, kann Schmutz in das Gehäuse eindringen. Diese Verschmutzung führt einerseits zu einem vorzeitigen Verschleiß des Saitenelements und kann sogar zu einem Reißen des Saitenelements führen. Andererseits wird durch den Schmutzeinfall auch die Dämpfungscharakteristik des Bewegungsdämpfers geändert, da diese auch von der Reibkraft beeinflusst wird, die bei der Bewegung des Saitenelements über die Umfangsführungsfläche auftritt. Wegen der Abhängigkeit der Dämpfungscharakteristik von der Reibkraft des Saitenelements und weil der Bewegungsdämpfer in der Regel so eingesetzt wird, dass das Saitenelement beim Herausführen aus der Öffnung in der Kappe über die Umfangsführungsfläche umgelenkt wird, ist die ideale Dämpfungscharakteristik auch nur bei einer Umlenkung des Saitenelements über die Umfangsführungsfläche vorhanden. Der Bewegungsdämpfer kann daher nur bedingt in anderen Anordnungen eingesetzt werden, in denen eine Umlenkung des Saitenelements nicht erforderlich ist und das Saitenelement deshalb geradlinig aus der stirnseitigen Öffnung des zylindrischen Gehäuses herausgeführt wird. Weiterhin treten bei der Umlenkung des Saitenelements über der Umfangsführungsfläche in bestimmten Richtungen Kippmomente auf das Saitenelement auf, welche zu einem Verdrallen und damit zu einem vorzeitigen Verschleiß des Saitenelements führen können.

Hiervon ausgehend liegt der Erfindung die Aufgabe zugrunde, einen gattungsgemäßen Bewegungsdämpfer so weiterzubilden, dass er die genannten Nachteile nicht mehr aufweist und insbesondere vorzeitigen Verschleiß des Saitenelements verhindert. Darüber hinaus soll der Bewegungsdämpfer universell und insbesondere in verschiedenen Anordnungen bezüglich des beweglichen Bauteils einsetzbar sein.

Gelöst werden diese Aufgaben mit einem Bewegungsdämpfer mit den Merkmalen des Anspruchs 1. Vorteilhafte Ausgestaltungen dieses Bewegungsdämpfers sind den Unteransprüchen entnehmbar.

Nachfolgend wird die Erfindung anhand eines Ausführungsbeispiels unter Bezugnahme auf die begleitenden Zeichnungen näher erläutert. Die Zeichnungen zeigen:
- **Figur 1:**: Querschnitt durch einen erfindungsgemäßen Bewegungsdämpfer (oben) sowie eine Detailansicht dieser Querschnittsdarstellung im Bereich des Umlenkelements zur Umlenkung und Herausführung des Verbindungselements (unten);
- **Figur 2:**: Perspektivische Darstellung des Bewegungsdämpfers von Figur 1, teilweise im Aufriss.

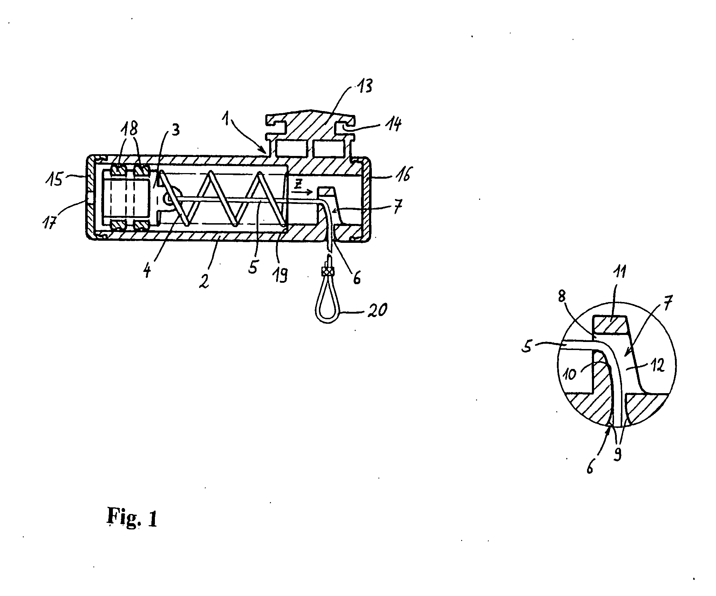

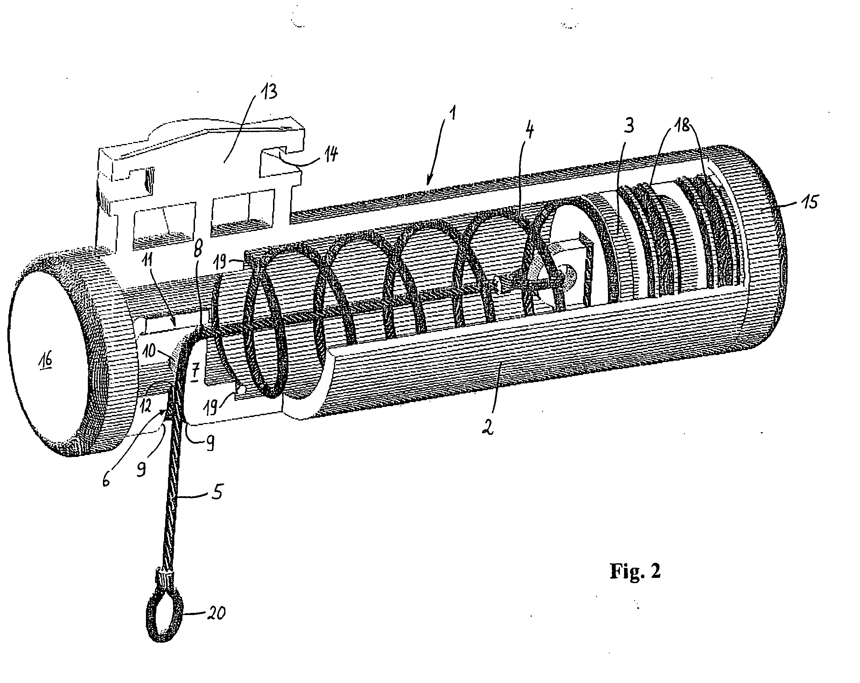

Der in den Figuren 1 und 2 zeichnerisch dargestellte Bewegungsdämpfer umfasst ein zylindrisches Gehäuse 1, welches im Spritzgussverfahren aus Kunststoff hergestellt wird. Das Gehäuse 1 besteht aus einem Zylindermantel 2, an dessen Außenseite ein Befestigungselement 13 angespritzt ist. Über dieses Befestigungselement 13 kann der Bewegungsdämpfer im Fahrzeug, beispielsweise innerhalb des Handschuhfachs an dessen Innenwand, befestigt werden. Bevorzugt ist die Befestigung durch eine Steck- oder Rastverbindung verwirklicht, um den Bewegungsdämpfer abnehmbar befestigen zu können. An dem Befestigungsteil 13 sind hierfür Rastelemente 14 vorgesehen, welche in korrespondierende Rastelemente am Fahrzeug, beispielsweise an der Innenwand des Handschuhfachs, einrasten können. Die beiden stirnseitigen Enden des Zylindermantels 2 sind jeweils durch Verschlusskappen 15 und 16 verschlossen. Die hintere Verschlusskappe 15 kann eine Öffnung 17 aufweisen, damit ein Druckausgleich stattfinden kann.

Innerhalb des Zylindermantels 2 ist ein Kolben 3 beweglich angeordnet. Am äußeren Umfang des im Wesentlichen zylindrischen Kolbens 3 sind bei dem hier zeichnerisch dargestellten Ausführungsbeispiel zwei in Längsrichtung hintereinander angeordnete Dichtringe angeordnet. Diese Dichtringe 18 sind in am Umfangsrand des Kolbens 3 umlaufende Nuten eingebracht, um ein Verrutschen auf der Kolbenaußenseite zu verhindern. Die Dichtringe und die Kolbenstange können auch als 2K-Teil gespritzt sein, d. h. die Dichtungen werden in die Kolbenstange gespritzt oder an deren Umfang angespritzt. Der Kolben 3 mit den Dichtringen 18 ist passgenau und gleitverschieblich in den Zylindermantel 2 eingeschoben, wobei die Dichtringe 18 an der Innenseite des Zylindermantels 2 anliegen und dort bei Bewegung des Kolbens 3 gegenüber dem Zylindermantel 2 eine der Bewegung entgegen gesetzte Reibkraft und damit eine Dämpfung dieser Bewegung erzeugen. Die Dämpfungscharakteristik wird hierbei im wesentlichen bestimmt durch die Anzahl der Dichtringe 18 (im gezeigten Ausführungsbeispiel: zwei Dichtringe) und dem Reibkoeffizienten, welcher wiederum abhängig ist von den Materialien der Dichtringe 18 und dem Zylindermantel 2 sowie einer etwaigen Schmierung mittels Fett oder Öl, das auf die Dichtringe 18 bzw. die Innenseite des Zylindermantels 2 aufgebracht wird. Die Dämpfungscharakteristik hängt darüber hinaus von der Verpressung der Dichtringe 18 im Zylindermantel 2 ab. Durch geeignete Auswahl dieser Parameter kann die Dämpfungscharakteristik dem jeweiligen Anwendungsfall und insbesondere den Parametern des beweglichen Bauteils, dessen Bewegung gedämpft werden soll, angepasst werden. Um eine nachträgliche Anpassung zu ermöglichen, ist die hintere Verschlusskappe 15 abnehmbar, so dass der Kolben 3 aus dem Zylindermantel 2 herausgenommen werden kann, um z.B. die Anzahl der Dichtringe 18 oder den Reibkoeffizienten (beispielsweise durch eine nachträgliche Schmierung der Dichtringe) nachträglich anpassen zu können.

An der Vorderseite des Kolbens 3 greift ein Vorspannelement 4 an, welches bei einer Bewegung des Kolbens 3 innerhalb des Zylindermantels 2 vorgespannt wird. Bei dem hier dargestellten Ausführungsbeispiel wird das Vorspannelement 4 durch eine Spiralfeder gebildet, welche sich an ihrem einen Ende an der Vorderseite des Kolbens 3 und an ihrem anderen Ende gegen einen Absatz 19 im Innern des Zylindermantels 2 abstützt. An der Vorderseite des Kolbens 3 ist ferner ein Verbindungselement 5 angelenkt. Dieses Verbindungselement 5, welches von einem Faden oder einem Seil gebildet ist, dient zur Kraftübertragung bei der Bewegung des Kolbens 3 innerhalb des Zylindermantels 2 auf das Objekt, dessen Bewegung gedämpft werden soll, also beispielsweise auf das bewegliche Bauteil, wie z.B. eine Handschuhfachklappe. Hierzu ist das andere Ende des Verbindungselements 5 mit diesem Objekt bzw. Bauteil gegebenenfalls über eine hier nicht zeichnerisch dargestellte Verlängerung verbunden. Zur Anbindung des Objekts bzw. des Bauteils oder einer Verlängerung an das Verbindungselement 5 ist eine Schlaufe 20 an diesem Ende des Verbindungselements 5 vorgesehen.

Bei einer Öffnungsbewegung des Bauteils, an das der Bewegungsdämpfer über das Verbindungselement 5 angelenkt ist, zieht das Verbindungselement 5 den Kolben 3 von seiner hinteren Position innerhalb des Zylindermantels 2 gegen die Kraft des Vorspannelements 4 und gegen die Reibkraft nach vorne. Dadurch wird das Vorspannelement 4 vorgespannt und übt in dieser Position eine Rückstellkraft auf den Kolben 3 aus. Diese Rückstellkraft erleichtert zum einen die Schließbewegung des Bauteils in entgegen gesetzter Richtung und bewerkstelligt die Rückführung des Dichtungssystems in seine Ausgangsposition. Der Schließbewegung wirkt lediglich die Reibkraft entgegen. Die Charakteristik des Vorspannelements 4, insbesondere deren Federkraft, bestimmt damit die Öffnungs- bzw. die Schließgeschwindigkeit des beweglichen Bauteils. Die Rückstellkraft des Vorspannelements 4 und die Reibkraft sind bevorzugt so eingestellt, dass die Rückstellkraft nicht dazu führt, die Schließbewegung des Bauteils selbsttätig einzuleiten, sondern nur dann, wenn eine zusätzliche Schließkraft auf das Bauteil einwirkt. Die Reibkraft verhindert insbesondere bei der Öffnungsbewegung ein Nachschwingen der Bewegung des Bauteils.

Innerhalb des Zylindermantels 2 ist in Zugrichtung Z gesehen hinter dem Vorspannelement 4 ein Umlenkelement 7 angeordnet, über oder durch welches das Verbindungselement 5 geführt und aus seiner ursprünglichen Richtung umgelenkt wird. Das Umlenkelement 7 ist bei dem hier zeichnerisch dargestellten Ausführungsbeispiel durch einen an der Innenseite des Zylindermantels 2 angeformten, ins Innere des Gehäuses 1 ragenden Flügel 11 gebildet. Das Umlenkelement 7 weist eine Einführöffnung 8 zur Einführung des Verbindungselements 5 auf. Diese Einführöffnung 8 liegt bevorzugt auf oder zumindest nahe der Zylinderachse, sie kann jedoch auch versetzt hierzu angeordnet sein. Da das Verbindungselement 5 auf Höhe der Zylinderachse an dem Kolben 3 angelenkt ist, verläuft das Verbindungselement 5 auf der Strecke zwischen der Vorderseite des Kolbens 3 und der Einführöffnung 8 längs der Zylinderachse, wenn die Einführöffnung 8 auf Höhe der Zylinderachse angeordnet ist. Die die Einführöffnung 8 umschließende, bevorzugt rotationssymmetrisch ausgebildete Fläche geht in eine gekrümmte Führungsfläche 10 über, wie aus der Detaildarstellung von Figur 1 ersichtlich. Das Verbindungselement 5, das durch die Einführöffnung 8 in das Umlenkelement 7 eingeführt wird, wird anschließend eng anliegend an diese Führungsfläche 10 um einen Winkel von etwa 90° aus seiner ursprünglichen, entlang oder zumindest nahezu parallel zur Zylinderachse laufenden Richtung umgelenkt.

Das Umlenkelement 7 weist einen sich an die Einführöffnung 8 anschließenden Kanal 12 auf, durch den das Verbindungselement 5 geführt wird. Der Kanal 12 mündet in eine Öffnung 6 im Zylindermantel 2. Die Öffnung 6 ist durch eine um ihre Mittelachse rotationssymmetrische Bohrung im Zylindermantel 2 gebildet und von einer konvex gekrümmten, rotationssymmetrisch ausgebildeten Führungsfläche 9 umgeben, wie aus der Detailansicht von Figur 1 sowie aus Figur 2 ersichtlich. Die Führungsfläche 9 schließt sich unmittelbar an die Führungsfläche 10 des Umlenkelements 7 nahtlos an. Das durch das Umlenkelement 7 umgelenkte Verbindungselement 5 wird schließlich durch den Kanal 12 und durch die Öffnung 6 in dem Zylindermantel 2 seitlich aus dem Gehäuse 1 herausgeführt. Der Durchmesser der Öffnung 6 ist bevorzugt nur geringfügig größer als der Außendurchmesser des Verbindungselements 5, damit keine Verschmutzung durch die Öffnung 6 in das Innere des Gehäuses 1 eindringen kann.

Bei dem erfindungsgemäßen Bewegungsdämpfer ist im Gegensatz zu dem eingangs genannten Bewegungsdämpfer nach dem Stand der Technik die Umlenkung und die Herausführung des Verbindungselements 5 aus dem Gehäuse 1 funktionsmäßig getrennt. Dies wird nach der Erfindung durch das im Innern des Zylindermantels 2 angeordnete Umlenkelement 7 bewirkt, welches das Verbindungselement 5 zunächst noch innerhalb des Gehäuses 1 umlenkt. Die Herausführung des Verbindungselements 5 aus dem Gehäuse 1 erfolgt dann örtlich getrennt von der Umlenkung seitlich durch die Öffnung 6 im Zylindermantel 2. Da die Umlenkung des Verbindungselements 5 im Innern des Gehäuses 1 erfolgt, ist dieser Bereich weitgehend vor Verschmutzungen geschützt. Durch Anpassung des Durchmessers der Öffnung 6 an den Außendurchmesser des Verbindungselements 5 kann der Einfall von Verschmutzung in den Umlenkbereich, also insbesondere auf die Führungsfläche 10, weitgehend verhindert werden.

Darüber hinaus liegt das Umlenkelement 7 stets auf gleicher Höhe mit der Anbindung des Verbindungselements 5 an dem Bauteil, dessen Bewegung gedämpft werden soll. Dadurch liegt die auf diese Anbindung einwirkende Kraft jeweils nahezu senkrecht auf der Ebene, die durch das Verbindungselement 5 (vor und nach der Umlenkung) aufgespannt wird, wodurch das gesamte Moment auf die Anbindung des Verbindungselements 5 minimiert werden kann. Weiterhin kann mit dem erfindungsgemäßen Bewegungsdämpfer das Verbindungselement 5 direkt in Richtung der Mittelachse der Anbindung des Bewegungsdämpfers an das Bauteil, dessen Bewegung gedämpft werden soll, angeordnet werden. Dadurch treten nur noch Biegemomente infolge der Kräfte auf, die in der Anbindungsfläche liegen, wodurch ebenfalls wiederum das auf die Anbindung wirkende Gesamtdrehmoment minimiert werden kann.

Da die Bewegungscharakteristik des erfindungsgemäßen Bewegungsdämpfers im wesentlichen durch die Reibung der Dichtringe 18 an der Innenseite des Zylindermantels 2 bestimmt wird und die Reibung des Verbindungselements 5 bei dessen Umlenkung an den Führungsflächen 9 und 10 die Bewegungscharakteristik nur geringfügig beeinflusst, kann der Bewegungsdämpfer bei gleich bleibender Dämpfungscharakteristik in fast jeder beliebigen Anordnung des Bewegungsdämpfers bezüglich des in seiner Bewegung zu dämpfenden Bauteils verwendet werden. Der Bewegungsdämpfer ist insbesondere auch geradlinig an das Bauteil anbindbar.

## Patentansprüche

1. Bewegungsdämpfer umfassend ein zylindrisches Gehäuse (1) mit einem Zylindermantel (2), einen innerhalb des Gehäuses (2) beweglichen Kolben (3), ein an den Kolben (3) gekoppeltes Vorspannelement (4), das bei einer Bewegung des Kolbens (3) vorgespannt wird und in gespanntem Zustand auf den Kolben (3) eine Rückstellkraft ausübt sowie ein Verbindungselement (5), das innerhalb des Gehäuses (1) an dem Kolben (3) angelenkt ist und zur Kraftübertragung an ein Objekt dient, dessen Bewegung gedämpft werden soll, **dadurch gekennzeichnet, dass** im Zylindermantel (2) eine Öffnung (6) vorgesehen ist und dass innerhalb des Gehäuses (1) ein Umlenkelement (7) angeordnet ist, über oder durch welches das Verbindungselement (5) geführt und in Richtung auf die Öffnung (6) im Zylindermantel (2) umgelenkt und durch die Öffnung (6) aus dem Gehäuse (1) heraus geführt wird.

2. Bewegungsdämpfer nach Anspruch 1, **dadurch gekennzeichnet, dass** das Umlenkelement (7) eine Einführöffnung (8) zur Einführung des Verbindungselements (5) aufweist, wobei diese Einführöffnung (8) auf oder nahe der Zylinderachse liegt.

3. Bewegungsdämpfer nach Anspruch 2, **dadurch gekennzeichnet, dass** das Verbindungselement (5) auf Höhe der Zylinderachse an dem Kolben (3) angelenkt ist, so dass das Verbindungselement (5) auf der Strecke zwischen dem Kolben (3) und der Einführöffnung (8) längs der Zylinderachse verläuft.

4. Bewegungsdämpfer nach einem der Ansprüche 1 bis 3, **dadurch gekennzeichnet, dass** die Öffnung (6) durch eine um ihre Mittelachse rotationssymmetrische Bohrung im Zylindermantel (2) gebildet ist.

5. Bewegungsdämpfer nach einem der Ansprüche 1 bis 4, **dadurch gekennzeichnet, dass** die Öffnung (6) im Zylindermantel (2) von einer konvex gekrümmten Führungsfläche (9) umgeben ist.

6. Bewegungsdämpfer nach Anspruch 5, **dadurch gekennzeichnet, dass** die Führungsfläche (9) um die Mittelachse der Öffnung (6) rotationssymmetrisch ausgebildet ist.

7. Bewegungsdämpfer nach einem der Ansprüche 1 bis 6, **dadurch gekennzeichnet, dass** das Umlenkelement (7) eine gekrümmte Führungsfläche (10) aufweist, über die das Verbindungselement (5) eng anliegend geführt und umgelenkt wird.

8. Bewegungsdämpfer nach den Ansprüchen 5 bis 7, **dadurch gekennzeichnet, dass** die Führungsfläche (10) des Umlenkelements (7) in die Führungsfläche (9) übergeht, welche die Öffnung (6) umgibt.

9. Bewegungsdämpfer nach einem der Ansprüche 1 bis 7, **dadurch gekennzeichnet, dass** das Umlenkelement (7) durch einen am Zylindermantel (2) angeformten, ins Innere des Gehäuses (1) ragenden Flügel (11) gebildet ist.

10. Bewegungsdämpfer nach Anspruch 9, **dadurch gekennzeichnet, dass** der Flügel (11) eine Einführöffnung (8) zur Einführung des Verbindungselements (5) und einen sich an die Einführöffnung (8) anschließenden Kanal (12) zur Durchführung des Verbindungselements (5) aufweist.

11. Bewegungsdämpfer nach Anspruch 9, **dadurch gekennzeichnet, dass** der Kanal (12) in die Öffnung (6) im Zylindermantel mündet.

## Claims

1. Movement damper comprising a cylindrical housing (1) with a cylinder casing (2), a piston (3) moveable inside the housing (2), a preloading element (4) which is coupled to the piston (3) and is preloaded when the piston (3) moves and in the preloading state exerts a restoring force on the piston (3), and a connecting element (5) which is articulated to the piston (3) inside the housing (1) and serves for transmitting force to an object the movement of which is to be damped, **characterised in that** an opening (6) is provided in the cylinder casing (2) and **in that** inside the housing (1) there is a deflecting element (7) through or by which the connecting element (5) is guided and deflected in the direction of the opening (6) in the cylinder casing (2) and guided out of the housing (1) through the opening (6) .

2. Movement damper according to claim 1, **characterised in that** the deflecting element (7) exhibits an introduction opening (8) for introduction of the connecting element (5), this introduction opening (8) lying on or near the axis of the cylinder.

3. Movement damper according to claim 2, **characterised in that** the connecting element (5) is articulated to the piston (3) level with the axis of the cylinder so that the connecting element (5) runs along the axis of the cylinder on the path between the piston (3) and the introduction opening (8).

4. Movement damper according to one of claims 1 to 3, **characterised in that** the opening (6) is formed by a bore in the cylinder casing (2) which is rotationally symmetrical about its central axis.

5. Movement damper according to one of claims 1 to 4, **characterised in that** the opening (6) in the cylinder casing (2) is surrounded by a convexly curved guide surface (9).

6. Movement damper according to claim 5, **characterised in that** the guide surface (9) is formed rotationally symmetrically about the central axis of the opening (6).

7. Movement damper according to one of claims 1 to 6, **characterised in that** the deflecting element (7) exhibits a curved guiding surface (10) by means of which the connecting element (5) is guided and deflected in close contact.

8. Movement damper according to claims 5 to 7, **characterised in that** the guide surface (10) of the deflecting element (7) runs into the guide surface (9) which surrounds the opening (6).

9. Movement damper according to one of claims 1 to 7, **characterised in that** the deflecting element (7) is formed by a wing (11) formed on the cylinder casing (2) and projecting into the interior of the housing (1).

10. Movement damper according to claim 9, **characterised in that** the wing (11) exhibits an introduction opening (8) for introduction of the connecting element (5) and a channel (12) adjoining the introduction opening (8) for passage of the connecting element (5).

11. Movement damper according to claim 9, **characterised in that** the channel (12) debouches into the opening (6) in the cylinder casing.

## Revendications

1. Amortisseur de mouvement comprenant un boîtier (1) cylindrique avec une enveloppe de cylindre (2), un piston (3) mobile à l'intérieur du boîtier (2), un élément de précontrainte (4) couplé au piston (3), qui est précontraint lors d'un mouvement du piston (3) et exerce une force de rappel à l'état tendu sur le piston (3), ainsi qu'un élément de liaison (5) qui est articulé à l'intérieur du boîtier (1) sur le piston (3) et sert à transmettre la force sur un objet, dont le mouvement doit être amorti, **caractérisé en ce qu'**une ouverture (6) est prévue dans l'enveloppe de cylindre (2) et **en ce qu'**à l'intérieur du boîtier (1), un élément de renvoi (7) est disposé, par le biais ou au travers duquel l'élément de liaison (5) est guidé et renvoyé en direction de l'ouverture (6) dans l'enveloppe de cylindre (2) et est guidé au travers de l'ouverture (6) hors du boîtier (1).

2. Amortisseur de mouvement selon la revendication 1, **caractérisé en ce que** l'élément de renvoi (7) présente une ouverture d'introduction (8) pour l'introduction de l'élément de liaison (5), cette ouverture d'introduction (8) reposant sur ou près de l'axe de cylindre.

3. Amortisseur de mouvement selon la revendication 2, **caractérisé en ce que** l'élément de liaison (5) est articulé à hauteur de l'axe de cylindre sur le piston (3) de sorte que l'élément de liaison (5) s'étende sur le parcours entre le piston (3) et l'ouverture d'introduction (8) le long de l'axe de cylindre.

4. Amortisseur de mouvement selon l'une quelconque des revendications 1 à 3, **caractérisé en ce que** l'ouverture (6) est constituée d'un percement à symétrie de révolution autour de son axe médian dans l'enveloppe de cylindre (2).

5. Amortisseur de mouvement selon l'une quelconque des revendications 1 à 4, **caractérisé en ce que** l'ouverture (6) dans l'enveloppe de cylindre (2) est entourée par une surface de guidage (9) cintrée de manière convexe.

6. Amortisseur de mouvement selon la revendication 5, **caractérisé en ce que** la surface de guidage (9) est réalisée à symétrie de révolution autour de l'axe médian de l'ouverture (6).

7. Amortisseur de mouvement selon l'une quelconque des revendications 1 à 6, **caractérisé en ce que** l'élément de renvoi (7) présente une surface de guidage (10) cintrée, par le biais de laquelle l'élément de liaison (5) est guidé et renvoyé en reposant de manière étroite sur celle-ci.

8. Amortisseur de mouvement selon les revendications 5 à 7, **caractérisé en ce que** la surface de guidage (10) de l'élément de renvoi (7) se fond dans la surface de guidage (9) qui entoure l'ouverture (6).

9. Amortisseur de mouvement selon l'une quelconque des revendications 1 à 7, **caractérisé en ce que** l'élément de renvoi (7) est constitué d'une aile (11) formée sur l'enveloppe de cylindre (2), pénétrant à l'intérieur du boîtier (1).

10. Amortisseur de mouvement selon la revendication 9, **caractérisé en ce que** l'aile (11) présente une ouverture d'introduction (8) pour l'introduction de l'élément de liaison (5) et un canal (12) se raccordant à l'ouverture d'introduction (8) pour le passage de l'élément de liaison (5).

11. Amortisseur de mouvement selon la revendication 9, **caractérisé en ce que** le canal (12) débouche dans l'ouverture (6) dans l'enveloppe de cylindre.
